# EUROPÄISCHE PATENTSCHRIFT

(11) **EP 3 216 336 B1**
(45) Veröffentlichungstag und Bekanntmachung des Hinweises auf die Patenterteilung: **09.05.2018**
(21) Anmeldenummer: 16159359.5
(22) Anmeldetag: 09.03.2016
(51) Int. Cl.: A01C 23/00, A01C 15/00, A01C 15/02, B65D 41/32, B65D 47/20

(54) **DÜNGEMITTEL, VERFAHREN UND VORRICHTUNG ZUM DOSIERTEN ABGEBEN EINES DÜNGEMITTELS**
FERTILIZERS, METHOD AND DEVICE FOR DOSING OF FERTILIZER
ENGRAIS, PROCEDE ET DISPOSITIF DE DOSAGE DE ENGRAIS

(43) Veröffentlichungstag der Anmeldung: 13.09.2017
(73) Patentinhaber: Hauert HBG Dünger AG, 3257 Grossaffoltern (CH)
(72) Erfinder: PLANTA, Ulrike, 66571 Eppelborn-Dirmingen (DE); HAUERT, Philipp, 3257 Grossaffoltern (CH)
(74) Vertreter: Wunderlich & Heim Patentanwälte Partnerschaftsgesellschaft mbB

(56) Entgegenhaltungen:
- EP-A2- 1 873 068
- JP-A- H 119 489
- JP-A- 2001 294 495
- NZ-A- 551 408
- US-A- 5 839 614

## Beschreibung

Die Erfindung betrifft ein Verfahren zum dosierten Abgeben eines Düngemittels gemäß dem Oberbegriff des Anspruchs 1.

Weiterhin betrifft die Erfindung eine Vorrichtung zum dosierten Abgeben von Düngemittel gemäß dem Oberbegriff des Anspruchs 5. Für eine wirtschaftliche Verwendung von Düngemitteln sowie ein günstiges Pflanzenwachstum kann eine kontrollierte Behandlung des die Pflanzen umgebenden Erdreichs mit Düngemittel zweckdienlich sein. Wird einer Pflanze eine zu geringe Menge an Düngemittel zugeführt, bleibt ein Teil ihres Wachstumspotentials beziehungsweise ihres potentiellen Fruchtertrags ungenutzt. Eine zu hohe Dosierung von Düngemittel kann die Düngekosten erheblich beeinflussen und zu einer Schädigung bis hin zum Abtöten der Pflanze führen. Bisherige, handelsübliche Verfahren zum Dosieren von Düngemitteln sind beispielsweise die Vorformung von festen Düngemitteln in eine beliebige handhabbare Dosiereinheit, welche in den Pflanzenboden eingebracht, insbesondere eingegraben wird. Weiterhin ist die Verwendung von flüssigen Düngemitteln bekannt, wobei diese in ein Messbehältnis überführt werden, um dieses anschließend der Pflanze direkt oder in verdünnter Form zuzuführen. Hierbei ist der Verwender gezwungen, mit offenen Gebinden zu arbeiten, wobei stets die Gefahr besteht, dass bereits beim Abmessen einer bestimmten Menge an flüssigem Düngemittel aus dem Vorratsgefäß dieses verschüttet wird oder eine Überdosierung in die Messvorrichtung stattfindet.

Die NZ 551408 A lehrt Phosphorsäure in Düngemittelqualität bereitzustellen und zu einer Düngemittelsuspension zu verarbeiten, die mit einer Viskosität im Bereich von 300 bis 2.000 cP bei 25°C vorliegt.

Aus der JP 2010294495 A geht ein pastenartiges Düngemittel hervor, welches als Langzeitdüngemittel in einer Bewässerungsanlage verwendet wird. Das Düngemittel wird in verdünnter Form über eine Regengussverteilvorrichtung angewendet.

Die US 5839614 A, JP H119489 A, EP 1873068 A2 offenbaren Behälter mit Dosiereinheiten für viskose Mittel wie zum Beispiel Produkte aus der Körperhygiene oder pastöse Nahrungsmittel. Der Erfindung liegt die Aufgabe zugrunde, ein Verfahren zum dosierten Abgeben eines Düngemittels und eine Vorrichtung zum dosierten Abgeben von Düngemittel anzugeben, welche eine präzise Abgabe von Düngemittel ermöglichen, wobei der Benutzer bei der Anwendung einem verminderten Risiko des Kontakts mit Düngemittel ausgesetzt ist. Die Aufgabe wird nach der Erfindung zum einen durch ein Verfahren zum dosierten Abgeben eines Düngemittels mit den Merkmalen des Anspruchs 1 und durch eine Vorrichtung zum dosierten Abgeben von Düngemittel mit den Merkmalen des Anspruchs gelöst. Bevorzugte Ausführungsformen der Erfindung sind in den jeweils abhängigen Ansprüchen angegeben.

Das erfindungsgemäße Verfahren zum dosierten Abgeben eines Düngemittels umfasst, dass das Düngemittel in einem viskosen Zustand vorgesehen wird, dass das viskose Düngemittel in einem Behälter mit einer druckempfindlichen Dosiervorrichtung vorgesehen wird, welche an einem Bodenbereich des Behälters angeordnet ist, und ein Innendruck des Behälters erhöht wird, wobei eine Abgabeöffnung der Dosiereinrichtung geöffnet und dabei viskoses Düngemittel dosiert abgegeben wird.

Weiterhin umfasst die erfindungsgemäße Vorrichtung zum dosierten Abgeben von Düngemittel, dass diese einen Behälter, der mit einem viskosen Düngemittel befüllt ist und eine druckempfindliche Dosiervorrichtung aufweist, welche an einem Bodenbereich des Behälters angeordnet ist, wobei die Dosiervorrichtung eine Abgabeöffnung aufweist, durch welche das viskose Düngemittel dosiert abgebbar ist, und die Abgabeöffnung ausgebildet ist, in Abhängigkeit von einer definierten Veränderung des Innendrucks des Behälters zwischen einem geöffneten Zustand und einem geschlossenen Zustand zu wechseln.

Ein Grundgedanke der Erfindung liegt darin, ein viskoses Düngemittel aus einem Behälter durch Erhöhung des Innendrucks des Behälters dosiert abzugeben. Hierbei weist der Behälter einen Abgabebereich, insbesondere eine Abgabeöffnung für das Düngemittel auf, welche durch die Erhöhung des Innendrucks geöffnet wird. Dies ermöglicht den dosierten, durch den erhöhten Innendruck bedingten Austritt von Düngemittel aus dem Behälter. Der Abgabebereich ist dabei so ausgebildet, dass er sich erst ab einem eingestellten Schwellenwert der Innendruckerhöhung öffnet. Der erhöhte Innendruck ist insbesondere höher als der umgebende atmosphärische Außendruck.

Ein weiterer Grundgedanke der Erfindung liegt darin, eine Vorrichtung zum dosierten Abgeben von Düngemittel bereitzustellen, welche mit einer Düngemittelabgabeöffnung ausgebildet ist. Diese kann durch geeignete Veränderung des Innendrucks des Behälters zwischen mindestens einem geöffneten Zustand, in welchem Düngemittel durch die Öffnung austreten kann und einem geschlossenen Zustand, in welchem das Düngemittel in dem Behälter zurückgehalten wird, wechseln.

Eine zweckmäßige Weiterbildung des erfindungsgemäßen Verfahrens besteht darin, dass der Innendruck durch ein Verformen mindestens einer Behälterwand erhöht wird. Die mit der Verformung einhergehende Verringerung des Innenvolumens des Behälters kann einen Kompressionsdruck auf den Behälterinhalt, insbesondere auf das in dem Behälter vorgesehene Düngemittel ausüben. Eine besonders intensive Erhöhung des Innendrucks des Behälters kann dadurch erreicht werden, dass ein gegenläufiges Verformen von gegenüber liegenden Behälterwänden oder Behälterwandteilen, insbesondere durch ein Zusammendrücken des Behälters bewirkt wird. Vorzugsweise wird der Behälter zum Aufbau eines definiert erhöhten Innendrucks elastisch verformt.

Eine besonders zweckmäßige Weiterbildung des erfindungsgemäßen Verfahrens besteht darin, dass zum Verformen der Behälterwand ein Quetschdruck bewirkt wird, welcher insbesondere durch einen dosierten Handdruck auf die mindestens eine Behälterwand bewirkt wird. Durch den Handdruck kann eine einzelne Behälterwand oder eine Mehrzahl von Behälterwänden beziehungsweise Behälterwandteilen verformt werden. Das Quetschen beziehungsweise Zusammendrücken des Behälters, insbesondere der mindestens einen Behälterwand, kann es dem Verwender des Behälters ermöglichen, den Innendruck in dem Behälter besonders kontrolliert zu verändern. Die Erhöhung des Innendrucks kann ebenfalls durch ein Aufrollen oder Falten des Behälters bewirkt werden.

Für eine besonders gleichmäßige Abgabe des Düngemittels kann es zweckmäßig sein, eine kontinuierliche Formveränderung des Festbehälters zu bewirken, wobei dem Abfall des Innendrucks entgegen gewirkt wird. Durch die Abgabe von Düngemittel aus dem Behälter kann zumindest ein Teil des aufgebauten erhöhten Innendrucks in dem Behälter ausgeglichen beziehungsweise abgebaut werden. Um einen gleichmäßigen Austritt von Düngemittel zu ermöglichen, kann es vorteilhaft sein, dem durch den Austritt des Düngemittels bedingten kontinuierlichen Abfall des erhöhten Innendrucks in dem Behälter durch eine kontinuierliche Verformung des Behälters entgegenzuwirken. So kann trotz eines Austritts von Düngemittel durch die Abgabeöffnung ein erhöhter Innendruck währen der Abgabe von Düngemittel kontinuierlich aufrechterhalten oder bedarfsgerecht durch Veränderung des Drucks auf die Behälterwand variiert werden.

Eine bevorzugte Ausführungsform der erfindungsgemäßen Vorrichtung besteht darin, dass der Behälter verformbar ist. Die Verformbarkeit des Behälters kann sowohl plastisch als auch elastisch sein. Ein plastisch verformbarer Behälter kann insbesondere dadurch gekennzeichnet sein, dass er sich unter einer Krafteinwirkung nach Überschreiten einer Fließgrenze irreversibel zu verformen beginnt und diese Form nach der Einwirkung der Kraft beibehält. Unterhalb der Fließgrenze können keine oder nur elastische Deformationen auftreten. Ein elastischer Behälter kann insbesondere dadurch gekennzeichnet sein, dass er sich unter einer Krafteinwirkung verformt, jedoch seine ursprüngliche Form wieder einnehmen kann, wenn die Krafteinwirkung nicht mehr auf den elastischen Behälter einwirkt. Bei elastischer Verformung kann der Behälter in verformten Zustand eine Rückstellkraft aufweisen, durch welche die ursprüngliche Form einnehmbar ist, sobald sich die Krafteinwirkung reduziert, beziehungsweise ausbleibt. Plastisch verformbare Behälter können insbesondere aus einem duktilen Metall oder Metalllegierung gebildet sein. Elastisch verformbare Behälter können insbesondere aus einem Kunststoff, vorzugsweise einem Thermoplast, Elastomer oder Duroplast gebildet sein. Vorzugsweise ist der Behälter aus einem transparenten, also lichtdurchlässigen Material gebildet, wodurch das Düngemittel für den Verwender durch die Behälterwand hindurch sichtbar ist. Für eine besonders exakte Dosierung des viskosen Düngemittels kann es vorteilhaft sein, dass im Bereich des Behältergrundkörpers eine von unten, von der Dosieröffnung aufsteigende Volumenskala vorgesehen ist, anhand welcher das Düngemittelvolumen in dem Behälter vor und nach einem Abgeben von Düngemittel bestimmbar ist. So kann es dem Verwender ermöglicht sein, stets die abgegebene Menge an viskosem Düngemittel direkt an der erfindungsgemäßen Vorrichtung abzulesen.

Eine besonders zweckmäßige Ausführungsform der erfindungsgemäßen Vorrichtung besteht darin, dass die Dosiervorrichtung im Bereich der Abgabeöffnung mindestens ein Element aufweist, welches zumindest teilweise flexibel ausgebildet ist und angeordnet ist, das viskose Düngemittel in dem geschlossenen Zustand der Abgabeöffnung im Behälter zurückzuhalten. Das mindestens eine Element kann die Abgabeöffnung zumindest in einer Position, insbesondere in einer ersten Position verschließen. Dabei kann das Material des Elements sowie seine Flexibilität auf die Eigenschaften des Düngemittels, insbesondere die Viskosität des Düngemittels angepasst sein. Besonders bevorzugt ist es, dass zum Zurückhalten eines Düngemittels mit besonders niedriger Viskosität das Element mit einem besonders hohen Elastizitätsmodul und/oder im geschlossenen Zustand vorzugsweise mit einer Vorspannung ausgebildet ist, was ein besonders zuverlässiges Verschließen der Abgabeöffnung ermöglicht. Der Elastizitätsmodul ist ein Materialkennwert, der den Zusammenhang zwischen Spannung und Dehnung bei der Verformung eines festen Körpers bei linear elastischem Verhalten beschreibt. Der Betrag des Elastizitätsmoduls ist umso größer, je mehr Widerstand ein Material seiner elastischen Verformung entgegensetzt. Das mindestens eine Element kann im geschlossenen Zustand der Abgabeöffnung mit einem Randbereich der Abgabeöffnung oder mit weiteren Elementen die Abgabeöffnung in formschlüssigen Kontakt stehen und die Abgabeöffnung ausfüllen, wodurch eine dichtende Wirkung des Elementes in der Abgabeöffnung erreicht werden kann. Hierbei kann das Element mit zumindest einem Bereich ausgebildet sein, welcher mit dem Randbereich der Abgabeöffnung oder mindestens einem weiteren Element vorzugsweise lediglich in losem, jedoch zumindest formschlüssigen Kontakt steht und insbesondere durch eine Vorspannung im Kontaktbereich eine dichtende Wirkung erzeugt. Somit kann die Abgabeöffnung als ein Bereich gebildet sein, welcher den Behälter in geschlossener Position bezüglich eines Austritts an Düngemittel verlässlich abdichtet. Bei innendruckbedingter Verformung von zumindest einem flexiblen Teil des mindestens einen Elements kann ein Durchtritt von Düngemittel durch die Öffnung ermöglicht sein.

Nach einer Weiterbildung der erfindungsgemäßen Vorrichtung kann eine besonders kontrollierte Abgabe von Düngemittel aus dem Behälter dadurch erreicht werden, dass das Element bei definiertem erhöhten Innendruck des Behälters aus einer ersten Position in eine zweite Position auslenkbar ist, wobei die Abgabeöffnung bei der zweiten Position des Elements in geöffnetem Zustand ist. Zumindest ein flexibler Bereich des mindestens einen Elements kann dazu ausgebildet sein, eine Auslenkung von zumindest einem Teil des mindestens einen Elements zu ermöglichen. Hierbei kann der Inhalt des Behälters bei dem definiert erhöhten Innendruck oder einem höheren Innendruck des Behälters eine Kraft auf das mindestens eine Element ausüben. Diese Kraft kann das Element aus seiner ersten Position wegbewegen. Das mindestens eine Element kann so ausgebildet sein, dass sich seine Auslenkung zwischen der ersten Position und der zweiten Position, in Abhängigkeit von dem vorliegenden Innendruck des Behälters mit steigendem Innendruck kontinuierlich ändert, sich also der zweiten Position stufenlos entgegenbewegt. Ebenfalls kann der Grad der Auslenkung des mindestens einen Elements bei abnehmendem Innendruck, über den angelegten Innendruck des Behälters einstellbar sein, wobei sich das mindestens eine Element bei fallendem Innendruck der ersten Position entgegenbewegt. In beiden Fällen kann der Grad der Auslenkung des Elements direkt von der Höhe des Innendrucks im Behälter abhängen. In jeder Position des mindestens einen Elements, welche sich von der ersten Position unterscheidet, also in der zweiten Position sowie in jeder Zwischenposition zwischen der ersten und er zweiten Position, kann ein Austritt von Düngemittel aus dem Behälter ermöglicht sein. Die Menge an austretendem Düngemittel pro Zeiteinheit kann insbesondere vom Grad der Auslenkung des mindestens einen Elements, von dem Grad der Öffnung der Abgabeöffnung, dem herrschenden Innendruck des Behälters sowie der Viskosität des in dem Behälter bevorrateten Düngemittels abhängig sein. Das Element kann auch so ausgebildet sein, dass es beim Erreichen des definiert erhöhten Innendrucks direkt aus der ersten Position in die zweite Position auslenkbar ist, wobei anders als beim kontinuierlichen Auslenken des mindestens einen Elements die Höhe des Innendrucks per se keinen Einfluss auf den Grad der Auslenkung hat, sobald ein DruckSchwellenwert überschritten ist. Der Innendruck des Behälters kann die Position des Elements also nur insofern beeinflussen, als dass der jeweilige Innendruck nur entweder die erste Position oder die zweite Position, jedoch keine weitere Position des mindestens einen Elements in der Abgabeöffnung, konstant aufrecht erhalten kann.

Besonders bevorzugt ist es nach der erfindungsgemäßen Vorrichtung, dass das Element zum Rückstellen aus der zweiten Position in die erste Position elastisch ausgebildet ist, wobei das Element in der zweiten Position ausgelenkt ist, und eine Rückstellkraft aufweist, mittels welcher das Element bei Unterschreitung des definiert erhöhten Innendrucks rückstellbar ist, und dass die Abgabeöffnung in der ersten Position des Elements im geschlossenen Zustand ist. Durch ein Vermindern des definiert erhöhten Innendrucks kann sich die Krafteinwirkung des Behälterinhalts auf eine innenliegende, der Behälterinnenseite zugewandten Seite des mindestens einen Elements, vermindern. Sobald die Rückstellkraft des Elements in der zweiten Position größer ist als die durch den Innendruck auf das mindestens eine Element wirkende Kraft, kann das Element die zweite Position verlassen und sich der ersten Position entgegenbewegen oder die erste Position direkt einnehmen. Zumindest der flexible Bereich des Elements kann hierbei so ausgebildet sein, dass die Rückstellkraft des Elements direkt vom Grad der Auslenkung aus der ersten Position abhängt. Somit kann insbesondere eine Rückstellkraft des Elements bei einer Position, welche zwischen der ersten und der zweiten Position liegt, kleiner sein als die Rückstellkraft des Elements in der zweiten Position. Besonders bevorzugt ist es, dass das mindestens Element in der ersten Position mit einer Vorspannung ausgebildet ist, mittels welcher ein besonders abdichtender Auflagedruck des Elements auf einen Randbereich der Abgabeöffnung oder zwischen einzelnen Elementen, insbesondere zwischen deren Oberflächen, ermöglicht ist. In der ersten Position kann das mindestens eine Element so angeordnet sein, dass die Abgabeöffnung zumindest gegen einen Austritt von Düngemittel aus dem Behälter verschlossen ist.

Eine besonders zweckdienliche Ausführungsform der Erfindung besteht darin, dass das mindestens eine Element als Lamelle ausgebildet ist. Die mindestens eine Lamelle kann hierbei sowohl anteilig, also teilweise, oder vollständig flexibel ausgebildet sein. Die Lamelle kann insbesondere mit einem in den Innenraum des Behälters ragenden, also einem zumindest anteilig vertikal gerichteten Bereich ausgebildet sein. Der Gewichtskraft des in dem Behälter bevorrateten Düngemittels kann so besonders zuverlässig entgegengewirkt werden. Dies kann insbesondere einem unerwünschten Austritt von viskosem Düngemittel beim Lagern des befüllten Behältnisses mit nach unten gerichteter Abgabeöffnung vorbeugen. Eine besonders bevorzugte Ausführungsform der erfindungsgemäßen Vorrichtung besteht darin, dass das Element zumindest in einem elastisch ausgebildeten Bereich eine räumlich begrenzte, innerhalb des Randbereichs der Lamelle liegende Unterbrechung aufweist, welche im geschlossenen Zustand durch mindestens zwei sich berührende Stoßflächen begrenzt wird. Bei den Stoßflächen kann es sich insbesondere um mindestens zwei innenliegende Kanten der Lamelle handeln. Die Kanten können insbesondere durch einen innenliegenden Schnitt durch die Lamelle gebildet sein, welcher vorzugsweise von der Schnittlänge kürzer ausgebildet ist als die Lamelle in Schnittrichtung. Erfindungsgemäß sind unter Stoßflächen, beziehungsweise Stoßkanten auch die Bereiche einer materialverlustfreien punktförmig durchstoßenen Lamelle zu verstehen, welche sich im Bereich des Punktdurchstoßes berühren.

Durch eine definierte Erhöhung des Innendrucks kann die Lamelle die erste Position verlassen, wobei die Unterbrechung aufgedehnt werden kann. So kann eine Öffnung zum Austritt von Düngemittel gebildet sein. In Abhängigkeit von der Höhe des angelegten Innendrucks kann die Öffnung der Unterbrechung der elastischen Lamelle der Größe nach variieren.

Für eine genaue Dosierung beim Austritt von Düngemittel durch eine wie voranstehend beschriebene penetrierte Lamelle, kann die innenliegende Unterbrechung oder Durchtrennung der Lamelle insbesondere linien-, kreuz- oder sternförmig ausgebildet sein. Beim Vorsehen eines einzelnen Elements, insbesondere in Form einer Lamelle, kann es besonders zweckmäßig sein, dass diese im Bereich des Innenumfangs der Abgabeöffnung die Abgabeöffnung vollständig und dichtend ausfüllt. Hierdurch kann der Austritt von Düngemittel im Bereich der Abgabeöffnung auf den Bereich der innenliegenden Durchtrennung beschränkt sein. Durch das definierte Erhöhen des Innendrucks kann eine so ausgebildete Lamelle, zumindest in ihrem flexiblen Bereich insbesondere in die zweiten Position nach außen gedrückt sein, wobei die mindestens eine Durchtrennung der Lamelle öffnend aufgestülpt ist und Düngemittel unter dem definiert erhöhten Innendruck durch die Durchtrennung aus dem Behälter austritt. In der zweiten Position kann die Lamelle mit einem dem Innenraum abgewandten, also einem zumindest anteilig vertikal nach außen beziehungsweise unten gerichteten Bereich ausgebildet sein.

Eine besonders anwenderfreundliche Ausführungsform der vorliegenden Erfindung besteht darin, dass die Dosiereinrichtung im geschlossenen Zustand der Abgabeeinrichtung für Düngemittel undurchlässig und für Luft durchlässig ist. Die Abgabe von Düngemittel aus dem Behälter kann zu einem verminderten Innendruck innerhalb des Behälters führen. Dies kann insbesondere dann der Fall sein, wenn der Behälter elastisch verformbar ausgebildet ist und eine verformende Kraft auf die mindestens einer Behälterwand, nicht mehr einwirkt. Dies kann bewirken, dass die Behälterwand unter dem verminderten Innendruck zunächst verhindert ist, ihre ursprüngliche Position, die sie vor Abgabe von Düngemittel hatte, wieder einzunehmen. Ein Teil der Rückstellkraft der Behälterwand bleibt bestehen, was die Verminderung des Innendrucks bewirkt. Der verminderte Innendruck kann insbesondere geringer sein als der atmosphärische Außendruck, welcher das Behältnis umgibt. Zum Rückstellen von zumindest einer Behälterwand in ihre ursprüngliche Position, also eine Position vor der Abgabe von Düngemittel, kann die Dosiereinrichtung das Eindringen von Luft in den Behälter ermöglichen, wodurch die eindringende Luft anteilig zum Behälterinhalt wird. Der Behälter kann also mittels der Rückstellkraft der mindestens einen elastischen Behälterwand Luft in den Behälter einsaugen, wenn diese aus ihrer Ausgangsposition ausgelenkt ist und ein verminderter Innendruck dem Rückstellen der Wand entgegensteht. Besonders zweckmäßig kann es sein, dass ein oberes Ende des Behälters dazu ausgebildet ist, im geschlossenen Zustand der Abgabeeinrichtung zumindest einen teilweisen Druckausgleich zwischen dem verminderten Innendruck des Behältnisses und einem umgebenden atmosphärischen Außendruck herzustellen. Der Behälter kann somit an einem unteren Bereich Düngemittel abgeben und in einem oberen Bereich im geschlossenen Zustand der Abgabeöffnung den Eintritt, insbesondere das Einsaugen von Luft in den Behälter ermöglichen. Hierdurch kann insbesondere der Blasenbildung innerhalb des viskosen Düngemittels vorgebeugt werden, was eine besonders präzise Dosierung von Düngemittel ermöglichen kann.

Eine besonders vorteilhafte Weiterbildung des Düngemittels besteht darin, dass das Düngemittel mindestens eines von organischen Düngemitteln, anorganischen Düngemitteln, Herbiziden, Fungiziden oder Pestiziden aufweist. Für eine auf die Bedürfnisse der Pflanzen angepasste Anwendung des erfindungsgemäßen Düngemittels kann es vorteilhaft sein, die Bestandteile des Düngemittels bedarfsgerecht entsprechend der Erfordernisse der zu düngenden Pflanzen zu variieren.

Insbesondere für eine direkte unverdünnte Applikation von Düngemittel in einem Oberflächenbereich unmittelbar um die zu düngende Pflanze kann ein Anhaften des Düngemittels, insbesondere an das umgebende Erdreich vorteilhaft sein. Dies kann zu einem verlustarmen Einsatz von Düngemittel, insbesondere bei Topfpflanzen, Baumschulen oder Aufzuchten beitragen.

Insbesondere für eine vorteilhafte Adhäsion des viskosen Düngemittels an das Erdreich kann das Düngemittel mit einer Viskosität von 10 mPa*s bis 10⁷ mPa*s, insbesondere 10² mPa*s 10⁵ mPa*s gebildet sein. Bevorzugterweise weist das Düngemittel die angegebene Viskosität von 25°C auf.

Besonders bevorzugt ist die Viskosität des Düngemittels bereits durch Düngemittelanteile eingestellt, welche ebenfalls einen Düngeeffekt bewirken oder zumindest den Pflanzenboden unter agrikulturellen Gesichtspunkten positiv beeinflussen. Hierbei kann insbesondere fibröse Cellulose verwendet werden.

Die Erfindung wird nachfolgend anhand eines bevorzugten Ausführungsbeispiels weiter beschrieben, welches schematisch in den beigefügten Zeichnungen dargestellt ist. In den Zeichnungen zeigen:
- Fig. 1: eine schematische perspektivische Darstellung eines erfindungsgemäßen Behälters zum dosierten Abgeben von Düngemittel,
- Fig. 2: eine schematische Querschnittsdarstellung des erfindungsgemäßen Behälters zum dosierten Abgeben von Düngemittel nach Fig. 1;
- Fig. 3a: eine schematische Querschnittsdarstellung einer Dosiervorrichtung für den erfindungsgemäßen Behälter zum dosierten Abgeben von Düngemittel nach Fig. 1 mit geschlossener Abgabeöffnung; und
- Fig. 3b: eine schematische Querschnittsdarstellung einer Dosiervorrichtung für den erfindungsgemäßen Behälter zum dosierten Abgeben von Düngemittel nach Fig. 1 mit geöffneter Abgabeöffnung.

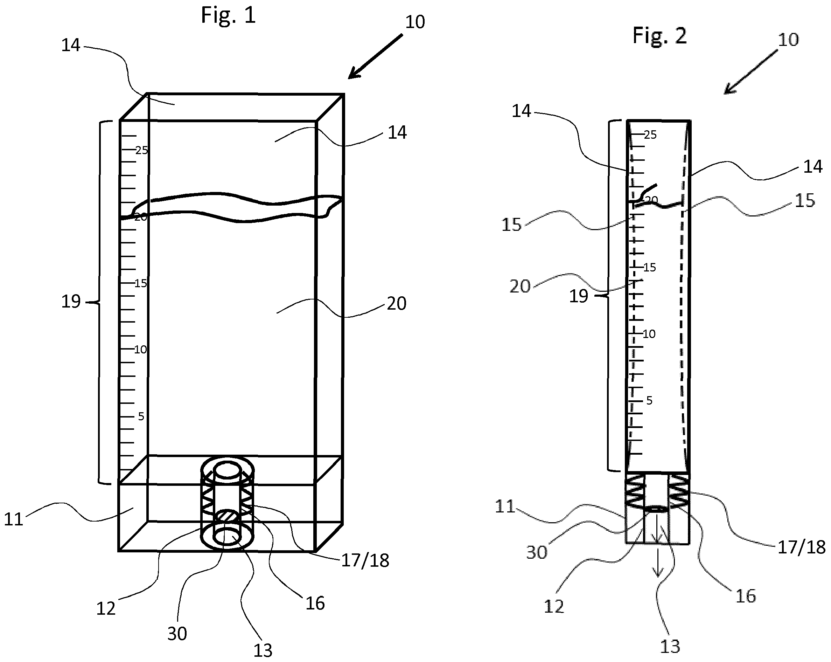

Fig. 1 zeigt schematisch eine perspektivische Darstellung eines Behälters 10 zum dosierten Abgeben von Düngemittel 20. Dieser ist quaderförmig mit zumindest zwei größeren Behälterwänden 14 ausgebildet. Der Behälter 10 kann auch mit einer zylindrischen Grundform mit einer umfangsseitig durchgehenden Behälterwand ausgebildet sein. Grundsätzlich kann der Behälter jede Form aufweisen, welche sich unter den Gesichtspunkten der Handhabung, Lagerung oder Befüllung als vorteilhaft erweist.

An einem unteren Ende des Behälters 10 kann der Bodenbereich 11 angeordnet sein, welcher über ein innenliegendes Schraubgewinde 17 mit dem Behälterhals 16, welcher ein außenliegendes Schraubgewinde 18 aufweist, verbunden ist. In Fig. 1 sind Innen- und Außengewinde mit dem Bezugszeichen Paar 17/18 bezeichnet. Im Bereich des Behälterhalses 16 kann eine Dosiervorrichtung 12 angeordnet sein, welche eine Abgabeöffnung 13 aufweist. In der Abgabeöffnung 13 ist ein Element 30 angeordnet, welches vorzugsweise als Lamelle ausgebildet sein kann.

Zum Befüllen des Behälters 10 kann der Bodenbereich 11 vom Behälter 10 entfernt, insbesondere abgeschraubt werden, wodurch die Dosiervorrichtung 12 mit dem Bodenbereich 11 aus dem Behälterhals 16 entfernt wird und den Behälterhals 16 zum Befüllen freigibt. Der Behälter 10 kann insbesondere aus einem transparenten, also lichtdurchlässigen Material gebildet sein. Im Bereich des Grundkörpers des Behälters 10 kann eine Volumenskala 19 vorgesehen sein, mittels welcher der Verwender des Behälters 10 das vorhandene Volumen an viskosem Düngemittel in dem Behälter 10 ablesen kann. Durch erneutes Ablesen der Skala nach einer Abgabe von Düngemittel aus dem Behälter 10 ist es dem Verwender ermöglicht, das exakt abgegebene Volumen von viskosem Düngemittel zu bestimmen.

Weist der Behälter 10 zum Beispiel an einem oberen Ende eine weitere Öffnung zum Befüllen auf, kann die Dosiervorrichtung 12 auch als Teil des Behälters 10 ausgebildet sein. Ein abschraubbarer Bodenbereich 11 ist in einem solchen Fall nicht zwingend erforderlich.

Fig. 2 zeigt eine schematische Querschnittsansicht des Behälters 10, wobei die Schnittebene die beiden breiten Behälterwände 14 sowie die Dosiervorrichtung 12 mittig und vertikal durchtrennt. Zum Erhöhen des Innendrucks in dem Behälter kann zumindest eine der Behälterwände 14 verformt werden. Besonders bevorzugt werden die zwei gegenüberliegenden Behälterwände 14, insbesondere durch einen Handdruck einander gegenseitig zugeführt (15), was eine definierte Erhöhung des Innendrucks bewirkt. Der Behälter 10, insbesondere die Behälterwände 14 können aus einem flexiblen Material gebildet sein, welche beim Zusammendrücken eine Rückstellkraft erzeugen, die die Behälterwand in Richtung ihrer ursprünglichen Ausrichtung zurückführt, sobald der Druck auf die Behälterwand nicht mehr einwirkt.

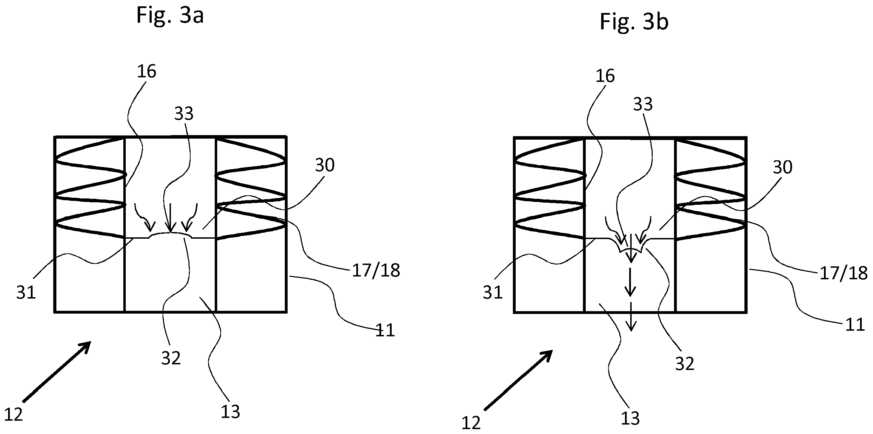

Fig. 3a zeigt in einer Vergrößerung der schematischen Querschnittsansicht von Fig. 2 die Dosiervorrichtung 12. Im Bereich der Abgabeöffnung 13 der Dosiervorrichtung 12 ist das scheibenförmige Element 30 angeordnet. Das Element 30 steht in Stoßkontakt mit dem Behälterhals 16. Das Element 30 weist einen starren äußeren Ringbereich 31 und einen flexiblen Bereich 32 auf, welcher innerhalb des starren Ringbereichs 31 liegt. Gemäß Fig. 3a befindet sich das scheibenförmige Element in einer ersten, geschlossenen Position. In dieser ist ein Austritt von Düngemittel aus dem Behälter 10 durch die Abgabeöffnung 13 verhindert. In einem Mittenbereich des scheibenförmigen Elements 30 weist der flexible Bereich 32 eine Materialunterbrechung 33 auf. Die Materialunterbrechung 33 ist vorzugsweise materialverlustfrei aus dem Element 30 gebildet und kann sowohl punktförmig als auch linien-, kreuz- oder sternförmig ausgebildet sein. In der ersten Position ist die Materialunterbrechung 33 durch den lateralen Kantenkontakt im flexiblen Bereich 32 verschlossen. Die Unterbrechung 33 liegt hierbei innerhalb des flexiblen Bereichs 32 und durchtrennt diesen vorzugsweise nicht vollständig in horizontaler Richtung, jedoch vollständig in vertikaler Richtung des Behälters. Hierdurch können die gegenüberliegenden Kanten der Unterbrechung besonders verlässlich ihre relative Position zueinander halten, was der abdichtenden Funktion des scheibenförmigen Elements 30 im flexiblen Bereich 32 zuträglich ist.

Fig. 3b zeigt ebenfalls eine vergrößerte Darstellung der Dosiervorrichtung 12 in derselben Querschnittsansicht. In Fig. 3b ist die Abgabeöffnung 13 in einem geöffneten Zustand dargestellt. Der flexible Bereich 32 des scheibenförmigen Elements 30 wird hier in einer zweiten ausgelenkten Position dargestellt, in welcher ein Durchtritt von Düngemittel aus dem Behälter 10 zu einem Außenbereich ermöglicht ist. Hierzu wird der Druck in dem Behälter 10, insbesondere durch einen Quetschdruck der Behälterwände 14 erhöht, wodurch das viskose Düngemittel 20 mit einer erhöhten Kraft auf den flexiblen Bereich 32 des scheibenförmigen Elements 30 einwirkt. Übersteigt der so erhöhte Innendruck einen Schwellenwert, erreicht dieser also einen definiert erhöhten Innendruck, kann der flexible Bereich 32 durch die Krafteinwirkung in eine zweite Position bewegt werden. Der flexible Bereich 32 kann insbesondere elastisch verformbar ausgebildet sein, wodurch der flexible Bereich 32 in der ausgelenkten zweiten Position eine Rückstellkraft aufweist, durch welche der flexible Bereich 32 in die erste Position rückstellbar ist, sobald der Schwellenwert des definiert erhöhten Innendrucks unterschritten wird.

In der zweiten Position kann die Materialunterbrechung 33 unter dem Druck des viskosen Düngemittels 20 aufgespreizt sein, wodurch eine Öffnung zum Austritt von viskosem Düngemittel 20 aus dem Behälter 10 gebildet ist. Durch eine Abgabe von viskosem Düngemittel 20 aus dem Behälter 10 wird das Volumen an viskosem Düngemittel 20 in dem Behälter 10 reduziert. Die Rückstellkraft der flexiblen, insbesondere elastischen Behälterwände 14 kann so eine Sogwirkung beziehungsweise einen Unterdruck, insbesondere im Bereich der Abgabeöffnung 13 hervorrufen, welcher Luft durch die Dosiervorrichtung 12, insbesondere die Materialunterbrechung 33 aus der Umgebung in den Behälter 10 einsaugen kann, sobald ein Verformen der Behälterwand durch den Benutzer ausbleibt. Wenn die Behälterwände 14 ihre Ausgangsposition erreicht haben und der verminderte Innendruck gegenüber dem umgebenden atmosphärischen Druck zumindest teilweise ausgeglichen ist, kann der Druckausgleich, also das Einsaugen von Luft in den Behälter beendet sein. Demnach kann die Abgabeöffnung 13 in dem geschlossenen Zustand zwar viskoses Düngemittel 20 zurückhalten, jedoch für Luft durchlässig sein.

Dies kann insbesondere hinsichtlich einer weiteren Anwendung des Behälters vorteilhaft sein, da ein erneutes Zusammendrücken der Behälterwände 14 aus der ursprünglichen, deformationsfreien Ausrichtung der Behälterwände 14 einen geringeren Kraftaufwand erfordert, als ein Verformen von bereits deformierten Behälterwänden 15.

Alle voranstehenden Ausführungen bezüglich der Behälterwände 14 gelten ebenfalls für alle weiteren Bestandteile des Behälters 10, welche bei einer elastischen Deformierung den Innendruck in dem Behälter 10 verändern können.

## Patentansprüche

1. Verfahren zum dosierten Abgeben eines Düngemittels (20) an Topfpflanzen, wobei,
- das Düngemittel (20) in einem viskosen Zustand vorgesehen wird,
- das viskose Düngemittel (20) in einem Behälter (10) mit einer druckempfindlichen Dosiervorrichtung (12) vorgesehen wird, welche an einem Bodenbereich (11) des Behälters (10) angeordnet ist,
- ein Innendruck des Behälters (10) durch Zusammendrücken von Hand erhöht wird, wobei eine Abgabeöffnung (13) der Dosiereinrichtung (12) geöffnet und dabei an einen Oberflächenbereich des die Pflanze umgebenen Erdreichs eine dosierte Menge viskoses Düngemittel (20) abgegeben wird und
- das viskose Düngemittel unter Verwendung fibröser Cellulose hergestellt ist, wobei die abgegebene Düngemittelmenge an dem Oberflächenbereich des Erdreichs anhaftet.

2. Verfahren nach Anspruch 1,
bei welchem der Innendruck durch ein Verformen mindestens einer Behälterwand (14) erhöht wird.

3. Verfahren nach Anspruch 2,
bei welchem zum Verformen der Behälterwand (14) ein Quetschdruck bewirkt wird, welcher insbesondere durch einen dosierten Handdruck auf die mindestens eine Behälterwand (14) bewirkt wird.

4. Verfahren nach einem der Ansprüche 1 bis 3,
bei welchem zur dosierten Düngemittelabgabe eine kontinuierliche Formveränderung des Festbehälters (10) bewirkt wird, wobei dem Abfall des Innendrucks entgegengewirkt wird.

5. Vorrichtung zum dosierten Abgeben von Düngemittel an Topfpflanzen, nach einem Verfahren der Ansprüche 1 bis 4, mit
- einer druckempfindlichen Dosiervorrichtung (12), welche an einem Bodenbereich (11) eines Behälters (10) angeordnet ist,
- wobei die Dosiervorrichtung (12) eine Abgabeöffnung (13) aufweist, durch welche das Düngemittel (20) dosiert abgebbar ist, und
- die Abgabeöffnung (13) ausgebildet ist, in Abhängigkeit von einer definierten Veränderung des Innendrucks des Behälters (10) zwischen einem geöffneten Zustand und einem geschlossenen Zustand zu wechseln, **dadurch gekennzeichnet, dass** der Behälter (10) mit einem viskosen Düngemittel (20), welches unter Verwendung fibröser Cellulose hergestellt ist, befüllt ist.

6. Vorrichtung nach Anspruch 5,
**dadurch gekennzeichnet,**
**dass** der Behälter (10) verformbar ist.

7. Vorrichtung nach Anspruch 5 oder 6,
**dadurch gekennzeichnet,**
**dass** die Dosiervorrichtung (12) im Bereich der Abgabeöffnung (13) mindestens ein Element (30) aufweist, welches zumindest teilweise flexibel ausgebildet ist und angeordnet ist, das viskose Düngemittel (20) in dem geschlossenen Zustand der Abgabeöffnung (13) im Behälter (10) zurückzuhalten.

8. Vorrichtung nach Anspruch 7, **dadurch gekennzeichnet,**
**dass** das Element (30) bei definiert erhöhtem Innendruck des Behälters (10) aus einer ersten Position in eine zweite Position auslenkbar ist, wobei die Abgabeöffnung (13) bei der zweiten Position des Elements (30) im geöffneten Zustand ist.

9. Vorrichtung nach Anspruch 8, **dadurch gekennzeichnet,**
- **dass** das Element (30) zum Rückstellen aus der zweiten Position in die erste Position elastisch ausgebildet ist, wobei das Element (30) in der zweiten Position ausgelenkt ist und eine Rückstellkraft aufweist, mittels welcher das Element (30) bei Unterschreitung des definiert erhöhten Innendrucks rückstellbar ist, und
- **dass** die Abgabeöffnung (13) in der ersten Position des Elements (30) im geschlossenen Zustand ist.

10. Vorrichtung nach einem der Ansprüche 7 bis 9, **dadurch gekennzeichnet,**
**dass** das mindestens eine Element (30) als Lamelle ausgebildet ist.

11. Vorrichtung nach einem der Anspruch 5 bis 10,
**dadurch gekennzeichnet,**
**dass** die Dosiereinrichtung (12) im geschlossenen Zustand der Abgabeeinrichtung (13) für Düngemittel (20) undurchlässig und für Luft jedoch durchlässig ist.

12. Vorrichtung nach einem der Ansprüche 5 bis 11,
**dadurch gekennzeichnet,**
**dass** die Dosiereinrichtung (12) ausgebildet ist, im geschlossenen Zustand der Abgabeeinrichtung (13) zumindest einen teilweisen Druckausgleich zwischen dem Innendruck des Behältnisses (10) und einem umgebenden atmosphärischen Außendruck herzustellen.

## Claims

1. Method for the dosed dispensing of a fertilizer (20) to potted plants,
wherein
- the fertilizer (20) is provided in a viscous state,
- the viscous fertilizer (20) is provided in a container (10) with a pressure-sensitive dosing device (12) which is arranged on a bottom area (11) of the container (10),
- an internal pressure of the container (10) is increased through manual compression, wherein a dispensing opening (13) of the dosing device (12) is opened and a dosed quantity of viscous fertilizer (20) is thereby dispensed to a surface area of the soil surrounding the plant and
- the viscous fertilizer is produced by using fibrous cellulose, wherein the dispensed fertilizer quantity adheres to the surface area of the soil.

2. Method according to claim 1,
in which the internal pressure is increased by deforming at least one container wall (14).

3. Method according to claim 2,
in which, for the purpose of deforming the container wall (14), a squeeze pressure is caused which is in particular brought about through a dosed manual pressure onto the at least one container wall (14).

4. Method according to any one of claims 1 to 3,
in which, for the dosed dispensing of fertilizer, a continuous change in shape of the solid container (10) is caused, wherein the drop of the internal pressure is counteracted.

5. Device for the dosed dispensing of fertilizer to potted plants according to a method of claims 1 to 4, having
- a pressure-sensitive dosing device (12) which is arranged on a bottom area (11) of a container (10),
- wherein the dosing device (12) has a dispensing opening (13), through which the fertilizer (20) can be dispensed in a dosed manner, and
- the dispensing opening (13) is designed to change between an open state and a closed state depending on a defined change of the internal pressure of the container (10),
**characterized in that**
the container (10) is filled with a viscous fertilizer (20) which is produced by using fibrous cellulose.

6. Device according to claim 5,
**characterized in that**
the container (10) is deformable.

7. Device according to claim 5 or 6,
**characterized in that**
in the area of the dispensing opening (13) the dosing device (12) has at least one element (30) which is of at least partially flexible design and arranged to retain the viscous fertilizer (20) in the container (10) in the closed state of the dispensing opening (13).

8. Device according to claim 7,
**characterized in that**
in the case of a defined increased internal pressure of the container (10) the element (30) can be deflected from a first position into a second position, wherein the dispensing opening (13) is in the open state in the second position of the element (30).

9. Device according to claim 8,
**characterized in that**
- for resetting from the second position into the first position the element (30) is of elastic design, wherein the element (30) is deflected in the second position and has a resetting force, by means of which the element (30) can be reset when the defined increased internal pressure is undershot, and
- **in that** the dispensing opening (13) is in the closed state in the first position of the element (30).

10. Device according to any one of claims 7 to 9,
**characterized in that**
the at least one element (30) is designed as lamella.

11. Device according to any one of claims 5 to 10,
**characterized in that**
in the closed state of the dispensing opening (13) the dosing device (12) is impermeable to fertilizer (20) and, however, permeable to air.

12. Device according to any one of claims 5 to 11,
**characterized in that**
in the closed state of the dispensing opening (13) the dosing device (12) is designed to produce at least a partial pressure balance between the internal pressure of the container (10) and a surrounding atmospheric external pressure.

## Revendications

1. Procédé de dosage d'un engrais (20) pour des plantes en pot, dans lequel
- l'engrais (20) est prévu dans un état visqueux,
- l'engrais (20) visqueux est prévu dans un contenant (10) pourvu d'un dispositif de dosage (12) sensible à la pression, qui est disposé au niveau d'une zone de fond (11) du contenant (10),
- une pression intérieure du contenant (10) est élevée manuellement par une compression, par laquelle une ouverture de distribution (13) du dispositif de dosage (12) est ouverte et une quantité dosée d'engrais (20) visqueux est ainsi distribuée à une zone de surface de la terre entourant la plante, et
- l'engrais visqueux est fabriqué en utilisant de la cellulose fibreuse, la quantité d'engrais distribuée adhérant à la zone de surface de la terre.

2. Procédé selon la revendication 1,
dans lequel la pression intérieure est élevée par une déformation d'au moins une paroi de contenant (14).

3. Procédé selon la revendication 2,
dans lequel une pression d'écrasement est provoquée aux fins de la déformation de la paroi de contenant (14), laquelle pression d'écrasement est provoquée en particulier par une pression manuelle dosée sur l'au moins une paroi de contenant (14).

4. Procédé selon l'une des revendications 1 à 3,
dans lequel une variation de forme continue du contenant (10) solide est provoquée aux fins de la distribution d'engrais dosée, la chute de la pression intérieure étant contrecarrée.

5. Dispositif pour le dosage d'engrais à des plantes en pot selon un procédé selon l'une des revendications 1 à 4, comportant :
- un dispositif de dosage (12) sensible à la pression, qui est disposé au niveau d'une zone de fond (11) d'un contenant (10),
- dans lequel le dispositif de dosage (12) présente une ouverture de distribution (13), par laquelle l'engrais (20) peut être distribué de manière dosée, et
- l'ouverture de distribution (13) est réalisée pour passer d'un état ouvert à un état fermé et vice versa en fonction d'une variation définie de la pression intérieure du contenant (10), **caractérisé en ce que** le contenant (10) est rempli d'un engrais (20) visqueux, qui est fabriqué en utilisant de la cellulose fibreuse.

6. Dispositif selon la revendication 5,
**caractérisé en ce**
**que** le contenant (10) peut être déformé.

7. Dispositif selon la revendication 5 ou 6,
**caractérisé en ce**
**que** le dispositif de dosage (12) présente dans la zone de l'ouverture de distribution (13) au moins un élément (30), qui est réalisé au moins en partie de manière flexible et est disposé pour retenir dans le contenant (10) l'engrais (20) visqueux dans l'état fermé de l'ouverture de distribution (13).

8. Dispositif selon la revendication 7,
**caractérisé en ce**
**que** l'élément (30) peut être dévié, à une pression intérieure élevée prédéterminée du contenant (10), depuis une première position dans une deuxième position, l'ouverture de distribution (13) étant dans l'état ouvert dans la deuxième position de l'élément (30).

9. Dispositif selon la revendication 8,
**caractérisé**
- **en ce que** l'élément (30) est réalisé de manière élastique afin de revenir depuis la deuxième position dans la première position, dans lequel l'élément (30) est dévié dans la deuxième position et présente une force de rappel, au moyen de laquelle l'élément (30) peut être rappelé en cas de valeur inférieure à la pression intérieure élevée prédéterminée, et
- **en ce que** l'ouverture de distribution (13) est dans l'état fermé dans la première position de l'élément (30).

10. Dispositif selon l'une des revendications 7 à 9,
**caractérisé en ce**
**que** l'au moins un élément (30) est réalisé sous la forme d'une lamelle.

11. Dispositif selon l'une des revendications 5 à 10,
**caractérisé en ce**
**que** le dispositif de dosage (12) ne laisse pas passer l'engrais (20) dans l'état fermé de l'ouverture de distribution (13) et laisse toutefois passer l'air.

12. Dispositif selon l'une des revendications 5 à 11,
**caractérisé en ce**
**que** le dispositif de dosage (12) est réalisé pour établir, dans l'état fermé du dispositif de distribution (13), au moins une compensation de pression partielle entre la pression intérieure du récipient (10) et une pression extérieure atmosphérique environnante.
